# EUROPEAN PATENT APPLICATION

(11) **EP 1 610 282 A1**
(43) Date of publication of application: **28.12.2005**
(21) Application number: 05011793.6
(22) Date of filing: 01.06.2005
(51) Int. Cl.: G09B 23/12

(54) **Method for experiment using scientific phenomenon evaluation apparatus, and scientific phenomenon evaluation apparatus**

(30) Priority: 01.06.2004 JP 2004163236
(71) Applicant: FUJI PHOTO FILM CO., LTD., Minami-Ashigara-shi, Kanagawa (JP)
(72) Inventor: Ueyama, Tomohide, Minami-Ashigara-shi Kanagawa (JP); Ichikawa, Yasunori, Minami-Ashigara-shi Kanagawa (JP)
(74) Representative: HOFFMANN EITLE

(57) **Abstract**

Before an experiment using an experimental liquid (34) is conducted, a preparatory step for removing air in minute channels (14A, 16A and 20A) is performed by causing a dummy liquid (35) which does not react with the experimental liquid (34) to rush into and fill the minute channels (14A, 16A and 20A). If air in the minute channel (14A, 16A and 20A) is not completely expelled by performing the preparatory step one time, and if a bubble is found in the dummy liquid (35), the preparatory step is repeated until the bubble in the dummy liquid (35) disappears. Subsequently, the experimental liquid (34) is supplied to reservoirs (24 and 26) on the inlet side and a liquid feed device (32) causes the dummy liquid (35) filling the minute channels (14A, 16A and 20A) to flow toward a reservoir (28) on the outlet side, thereby initiating the experiment.

## Description

### BACKGROUND OF THE INVENTION

### 1. Field of the Invention

The present invention relates to a method for experiment using a scientific phenomenon evaluation apparatus and to the scientific phenomenon evaluation apparatus. More particularly, the present invention relates to a scientific phenomenon evaluation apparatus suitable for easily enjoying an advanced technology and to a method for enabling an experiment to be performed by using the apparatus without failure.

### 2. Related Art

Scientific phenomenon evaluation apparatuses of various constructions including experimental apparatuses for scientific education have been proposed (see Japanese Patent Application Laid Open No. 2000-242162).

For example, Japanese Patent Application Laid Open No. 2000-242162 discloses a scientific apparatus for educational use which enables observation of natural phenomena relating to changes of water with respect to temperature by cooling or freezing water in a container or water vapor in the air, and which is simple in structure and capable of faithfully reproducing various natural phenomena relating to changes of water with respect to temperature.

As chemical experimental apparatuses for educational uses, experimental kits such as "Kagaku to Gakushu Jikken Kit Series" (science and learning experimental kit series) and "Otonano Kagaku Chikyu Kankyo Bunseki Kit" (science for adults global environment analysis kit) from Gakken Co., Ltd. have been put on the market. Such experimental kits are being sold at comparatively low prices, about several hundred yen to three thousand yen, enabling children to dream about sciences and users to enjoy experiments and gaining public favor.

Conventional scientific phenomenon evaluation apparatuses of this kind including the one described in Japanese Patent Application Laid Open No. 2000-242162, however, are comparatively complicated in construction, difficult to provide at a low price and inappropriate as an apparatus purchased by all students in a class.

On the other hand, experimental kits comparatively simple in construction are usually low-priced and suitable as a kit purchased and used by all students in a class but are usually unsatisfactory in terms of finish accuracy and therefore use increased amounts of chemicals. If such an experimental kit is used by all students in a class, an environmental load due to a waste liquid treatment for example, which is not negligible, occurs.

The most of the conventional experimental kits are for experience of classical scientific experiments and only a few of them enable easily enjoying advanced technologies.

In view of these circumstances, the inventors of the present invention think that an apparatus which is constituted by a base plate having a groove of a small sectional area formed in its surface and a cover plate placed in close contact with the surface of the base plate to cover the groove and to thereby form a minute channel in the base plate, and which enables a scientific phenomenon in the channel to be visually recognized is promising as a scientific phenomenon evaluation apparatus of a low price and a low environmental load and suitably for enjoying an advanced technology.

### SUMMARY OF THE INVENTION

In the case of an apparatus for evaluating a scientific phenomenon by feeding a liquid into a minute channel, there is a possibility of the minute channel being clogged with a bubble at an intermediate position in the channel. If there is a bubble clog, the fed liquid is disturbed and it is difficult to attain a steady state, resulting in failure to correctly evaluate the scientific phenomenon. Further, failure to perform the experiment due to clogging of the minute channel with a bubble leads to wasting of the time required for the experiment and an experimental liquid used for the experiment. In particular, in a case where an experimental liquid having a high surface tension is caused to flow through a minute channel, a bubble can easily clog the minute channel and it is extremely difficult to remove the bubble clogging the channel.

In many cases of apparatuses for evaluating scientific phenomena by feeding a liquid into a minute channel, clogging with a bubble in use of the apparatus is a consideration. There is a demand for simple method for solving this problem. In the case of a scientific experiment performed by low-age students such as elementary school children in particular, it is extremely difficult to feed a liquid into a minute channel without causing a bubble in the channel. In achieving widespread use of scientific phenomenon evaluation apparatuses of this kind, it is very important to enable everyone to perform a scientific experiment without causing clogging with a bubble.

In view of the above-described circumstances, an object of the present invention is to provide a method for experiment using a scientific phenomenon evaluation apparatus which supplies a liquid into a minute channel for evaluation of a scientific phenomenon, which is low-priced, which has a reduced environmental load, and which enables easily enjoying an advanced technology, and which is capable of preventing failure to perform an experiment due to clogging of a minute channel with a bubble, and to provide the scientific phenomenon evaluation apparatus.

To achieve the above-described object, according to a first aspect of the present invention, there is provided a method for experiment using a scientific phenomenon evaluation apparatus in which at least two reservoirs constituting an inlet and an outlet communicate with each other through a minute channel having a sectional area of 1 mm² or less, the method including a preparatory step of removing air from the minute channel in advance by causing an inactive dummy liquid which does not react with an experimental liquid for performing an experiment to flow into and fill the minute channel, the preparatory step being performed at least one time, and an experiment step of supplying the experimental liquid to the reservoir on the inlet side and feeding the experimental liquid into the minute channel by using a liquid feed device to cause the dummy liquid filling the minute channel to flow toward the reservoir on the outlet side.

According to the first aspect of the present invention, the preparatory step is performed in which, in order to reliably perform an experiment without failure, air in the minute channel is removed by causing an inactive dummy liquid which does not react with an experimental liquid, e.g., water to rush into the minute channel so that the minute channel is filled with the dummy liquid, before the experiment is started by using the experimental liquid. If air in the minute channel is not completely expelled by performing the preparatory step one time, and if a bubble is found in the dummy liquid, the preparatory step is repeated until the bubble in the dummy liquid disappears. Subsequently, the experimental liquid is supplied to the reservoir on the inlet side and the dummy liquid filling the minute channel is caused by the liquid feed device to flow to the reservoir on the outlet side, thereby feeding the experimental liquid into the minute channel before the experiment is started. Thus, the experimental liquid supplied to the reservoir on the inlet side is fed into the minute channel in succession with the flow of the dummy liquid previously filled in the minute channel to the outlet side. Air is not mixed with the experimental liquid during the experiment, and failure to perform the experiment due to clogging with a bubble can be prevented. Since water is used as the dummy liquid in ordinary cases, an increase in cost in the case of use of the experimental method of the present invention is negligible.

To achieve the above-described object, according to a second aspect of the present invention, there is provided a method for experiment using a scientific phenomenon evaluation apparatus in which at least two reservoirs constituting an inlet and an outlet communicate with each other through a minute channel having a sectional area of 1 mm² or less, the method including a preparatory step of removing air from the minute channel in advance by causing an experimental liquid for performing an experiment to flow into and fill the minute channel, the preparatory step being performed at least one time, and an experiment step of supplying the experimental liquid to the reservoir on the inlet side and feeding the experimental liquid into the minute channel by using a transfer device to cause the experimental liquid filling the minute channel to flow toward the reservoir on the outlet side.

In the second aspect, the experimental liquid itself is used as a dummy liquid for removing air in the minute channel and a certain amount of the experimental liquid is wasted in comparison with the case of using a dummy liquid such as water. However, performing the preparatory step one time ordinarily suffices, and the experimental liquid can be saved in comparison with a case where an experiment repeatedly ends in failure due to clogging with a bubble in the minute channel.

A third aspect of the present invention is characterized in that the method according to the first or second aspect includes a soaking-up step of lowering the level of the liquid in the reservoir on the inlet side by soaking up the liquid in the reservoir on the outlet side by means of a tapered soaking-up member, the soaking-up step being provided between the preparatory step and the experiment step.

When the above-described preparatory step is performed, the dummy liquid also stays in the reservoir on the inlet side to which the experimental liquid is to be supplied. There is a need to lower the level of the liquid in the reservoir on the inlet side in order to enable supply of the experimental liquid to the reservoir on the inlet side. In this case, there is a need to lower the level of the liquid in the reservoir on the inlet side while maintaining the state in which the minute channel is filled with the dummy liquid.

According to the third aspect, the force of soaking up from the reservoir on the outlet side by the soaking-up member causes the liquid in the state of filling the minute channel to flow to the outlet side, thereby lowering the level of the liquid in the reservoir on the inlet side. By this soaking up using the tapered soaking-up member, an extremely small amount of the liquid can be soaked up at a time. Therefore, no part of the liquid in the minute channel is soaked up. As a result, mixing of air in the minute channel can be prevented. In this case, even if air is mixed in the liquid when the soaking-up member is dipped in the liquid, this mixing is caused in the reservoir on the outlet side and a bubble thereby formed is expelled through the outlet when the experiment is started by feeding the experimental liquid into the minute channel. Therefore, there is no problem with this mixing of air. A twisted piece of paper such as a tissue having a tapered end can be suitably used as the soaking-up member.

To achieve the above-described object, according to a fourth aspect of the present invention, there is provided a scientific phenomenon evaluation apparatus including a base plate having a surface in which a groove having a sectional area of 1 mm² or less is formed, and a cover plate placed in close contact with the surface of the base plate to cover the groove and to thereby form a minute channel in the base plate, wherein ends of a plurality of the channels join each other at one confluence point, while the other ends of the channels respectively communicate with reservoirs having a capacity of 5 to 5000 mm³, and wherein a scientific phenomenon in the channels is visually recognizable and the plurality of channels are filled with an inactive dummy liquid which does not react with an experimental liquid for performing an experiment, no air bubble existing in the dummy liquid.

According to the fourth aspect, a plurality of minute channels having a sectional area of 1 mm² or less are formed in the evaluation apparatus, ends of these channels join each other at one confluence point, and the plurality of channels are filled with an inactive dummy liquid which does not react with an experimental liquid for performing an experiment, no air bubble existing in the dummy liquid. When the experimental liquid is caused to flow into the minute channel to perform the experiment using the experimental liquid, the dummy liquid with which the minute channel is filled in advance is expelled by the experimental liquid. This arrangement ensures that a scientific phenomenon such as a molecule diffusion phenomenon can be qualitatively observed without failure to perform the experiment due to clogging of the minute channel with a bubble. In the case of performing a scientific experiment for low-age students such as elementary school children in particular, it is extremely difficult to feed a liquid into a minute channel without causing a bubble in the channel. However, if a scientific phenomenon evaluation apparatus such as that of the present invention which removes bubbles from the minute channel in advance is used, even elementary school children can perform the experiment without failure.

Also, an accuracy high enough to experience various phenomena such as diffusion phenomena, heat transfer phenomena and chemical phenomena (e.g., acid-alkali reaction and hydrolysis reaction) of liquids caused in the minute channel can be obtained and the amounts of materials including chemicals are limited, thus reducing the environmental load. Therefore, this scientific phenomenon evaluation apparatus is suitable as a scientific-experiment educational aid. As a liquid feed method for causing the experimental liquid to flow into the minute channel, a method of feeding the liquid by pressurization or depressurization using a pump or the like may be used.

The sectional area of the minute groove is preferably 1 mm² or less, more preferably 0.025 to 0.64 mm², and most preferably 0.01 to 0.25 mm².

The "reservoir" is ordinarily a void, to which a chemical or the like is supplied when the evaluation apparatus is operated.

To achieve the above-described object, according to a fifth aspect of the present invention, there is provided a scientific phenomenon evaluation apparatus including a base plate having a surface in which a groove having a sectional area of 1 mm² or less is formed, and a cover plate placed in close contact with the surface of the base plate to cover the groove and to thereby form a minute channel in the base plate, wherein ends of first and second channels which are the two channels formed by the cover plate and which are substantially equal in length to each other join each other at one confluence point; the other end of the first channel communicates with a first reservoir having a capacity of 5 to 5000 mm³; the other end of the second channel communicates with a second reservoir having a capacity of 5 to 5000 mm³; one of a third channel which is the one channel formed by the cover plate communicates with the confluence point, while the other end of the third channel communicates with a third reservoir having a capacity of 5 to 5000 mm³; a scientific phenomenon in the channels is visually recognizable; and the plurality of channels are filled with an inactive dummy liquid which does not react with an experimental liquid for performing an experiment, no air bubble existing in the dummy liquid.

According to the present invention, three minute channels having a sectional area of 1 mm² or less are formed in this evaluation apparatus, ends of these channels join each other at one confluence point, and the plurality of channels are filled with an inactive dummy liquid which does not react with an experimental liquid for performing an experiment, no air bubble existing in the dummy liquid. This arrangement ensures that a scientific phenomenon such as a molecule diffusion phenomenon can be qualitatively observed without failure to perform the experiment due to clogging of the minute channel with a bubble. Also, an accuracy high enough to experience an advanced technology can be obtained, the amounts of materials including chemicals are limited and the environmental load is small. Therefore, this scientific phenomenon evaluation apparatus is suitable as a scientific-experiment educational aid.

The scientific phenomenon comprises various chemical phenomena and physical phenomena of liquids which occur in the minute channel, including various phenomena such as liquid diffusion phenomena, liquid thermal transfer phenomena, liquid mixing phenomena and liquid chemical phenomena (e.g., acid-alkali reaction and hydrolysis reaction).

According to the present invention, as described above, an advanced technology can be easily enjoyed at a low cost with a reduced environmental load, and failure to perform an experiment due to clogging of the minute channel with a bubble can be prevented.

### BRIEF DESCRIPTION OF THE DRAWINGS

Fig. 1 is a plan view of the construction of a scientific phenomenon evaluation apparatus used in an experimental method in accordance with the present invention;
Fig. 2 is an enlarged sectional view of a portion shown in Fig. 1;
Fig. 3 is an enlarged sectional view of a portion shown in Fig. 1;
Figs. 4A to 4C are sectional views showing a preparatory step in a procedure in accordance with the experimental method of the present invention;
Figs. 5A to 5C are sectional views showing a soaking-up step in the procedure in accordance with the experimental method of the present invention;
Figs. 6A to 6D are sectional views showing an experiment step in the procedure in accordance with the experimental method of the present invention; and
Fig. 7 is a diagram for explaining an example of a multichannel scientific phenomenon evaluation apparatus.

### DETAILED DESCRIPTION OF THE PREFERRED EMBODIMENTS

A preferred embodiment of a method for experiment using a scientific phenomenon evaluation apparatus and of the scientific phenomenon evaluation apparatus in accordance with the present invention will be described in detail with reference to the accompanying drawings.

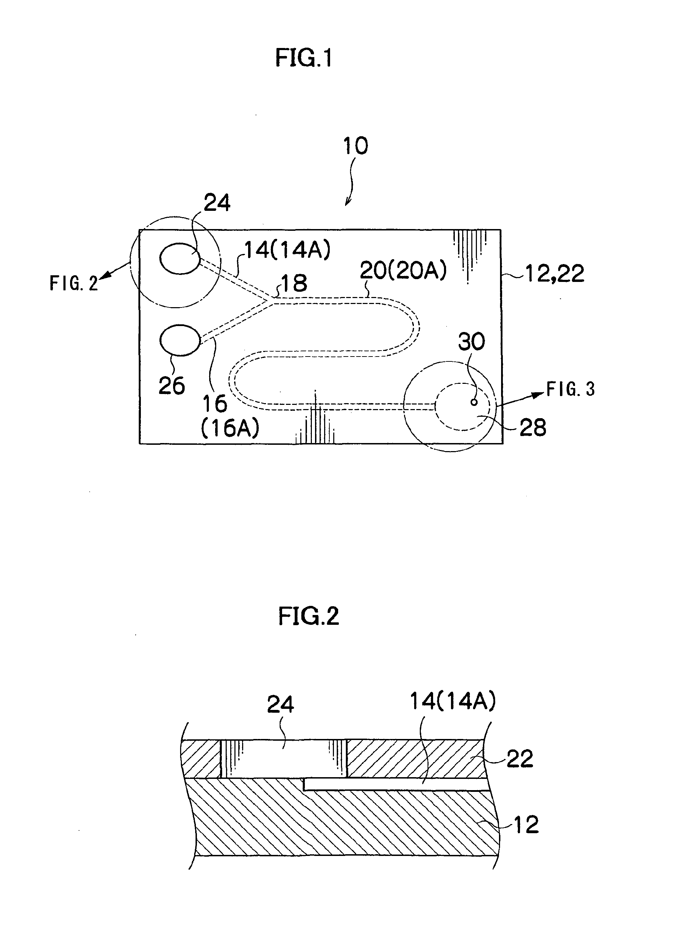

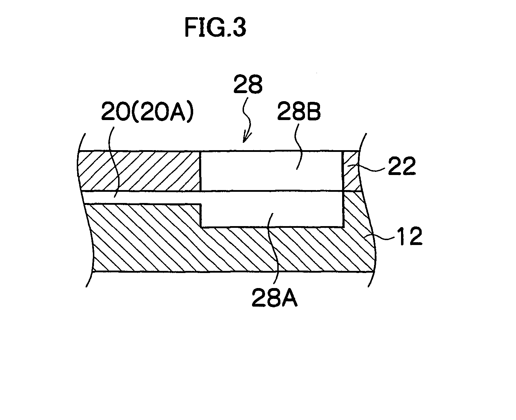

Fig. 1 is a plan view of the construction of a scientific-experiment educational aid 10 which is a scientific phenomenon evaluation apparatus for carrying out a method for experiment according to the invention. Figs. 2 and 3 are enlarged views of a portion of the apparatus shown in Fig. 1. Fig. 2 shows a first reservoir 24 (in the upper left circle indicated by a dot-dash line in Fig. 1), and Fig. 3 shows a third reservoir 28 (in the lower right circle indicated by a dot-dash line in Fig. 1).

The scientific-experiment educational aid 10 is constituted by a base plate 12 having a surface in which grooves (14, 16 and 20) having a sectional area of 1 mm² or less are formed, and a transparent cover plate 22 which is placed in close contact with the surface of the base plate 12 to cover the grooves and to thereby form minute channels (14A, 16A and 20A) in the base plate 12.

The minute channels (14A, 16A and 20A) formed by the grooves (14, 16 and 20) are a first channel 14A and a second channel 16A which are equal to each other in length and which join each other at a confluence point 18, and a third channel 20A which further joins the first channel 14A and the second channel 16A at the confluence point 18.

The end of the first channel 14A opposite from the end joining the second and third channels 16A and 20A communicates with the first reservoir 24 which is a cylindrical void formed in the cover plate 22; the end of the second channel 16A opposite from the end joining the first and third channels 14A and 20A communicates with a second reservoir 26 formed in a cylindrical void formed in the cover plate 22; and the end of the third channel 20A opposite from the end joining the first and second channels 14A and 16A communicates with the third reservoir 28 formed by a cylindrical void 28A formed in the base plate 12 and a cylindrical void 28B formed in the cover plate 22 at the corresponding position.

Preferably, each of the capacities of the first reservoir 24 and the second reservoir 26 is 5 to 5000 mm³ and the capacity of the third reservoir 28 is 10 to 10000 mm³. If the capacities of these reservoirs are set to these values, each of phenomena which occur in the microchannels can be easily controlled.

There are no particular restrictions on the planar size of the base plate 12 and the cover plate 22. However, the base plate 12 and the cover plate 22 may have a portable size according to the characteristics of the scientific-experiment educational aid 10 used in school, e.g., 80 × 50 mm. There are no particular restrictions on the thicknesses of the base plate 12 and the cover plate 22. However, each of the thicknesses of the base plate 12 and the cover plate 22 may be set, for example, to about 5 mm by considering the strength, economy, etc.

There are no particular restrictions on the selection of the material of the base plate 12. However, a resin material for facilitating the manufacturing process described below, more specifically polydimethylsulfoxide (PDMS), polymethyl methacrylate (PMMA), polyvinyl chloride (PVC), an ultraviolet curing resin, polycarbonate (PC) or the like is preferably used.

The sectional area of the grooves (14, 16, and 20) formed in the surface of the base plate 12 is preferably 1 mm² or less, as mentioned above. The sectional area of the grooves is more preferably 0.025 to 0.64 mm², and most preferably 0.01 to 0.25 mm². There are no particular restrictions on the selection of the sectional shape of the grooves (14, 16, and 20). Any of various shapes such as a rectangular shape (a square, a rectangle), a trapezoidal shape, a V-shape and a semicircular shape can be adopted.

There are no particular restrictions on the selection of the material of the cover plate 22. However, it is preferable to use a transparent plate as the cover plate 22 to enable a scientific phenomenon in the minute channels to be visually recognized. Such a plate usable as the cover plate 26 may be, for example, a plate formed of any of various resin materials, e.g., polydimethylsulfoxide (PDMS), polymethyl methacrylate (PMMA), polyvinyl chloride (PVC), an ultraviolet curing resin and polycarbonate (PC), a film of any of various resins, e.g., polyethylene terephthalate (PET), polyethylene naphthalate (PEN) and triacetyl cellulose (TAC), or any of various glasses (soda-lime glass, borosilicate glass, etc.).

Ordinarily, the cover plate 22 is a flat plate having flat front and back surfaces. However, the cover plate 22 may be formed in such a manner that the front surface corresponding to the minute channels (14A, 16A, and 20A) is formed as a convex lens having a semicylindrical surface to enable a scientific phenomenon to be observed in an enlarged state.

An arrangement may alternatively be adopted in which the base plate 12 is transparent while the cover plate 22 is nontransparent.

It is preferable to ensure a sufficiently high degree of flatness of the front surface of the base plate 12 (the surface in which the grooves are formed) and the back surface of the cover plate 22 (the surface maintained in close contact with the base plate 12) from the viewpoint of the formation of the minute channels (14A, 16A, and 20A) and prevention of liquid leakage for example.

A method of forming the base plate 12 will now be described. A reverse mold having a surface in which shapes reverse to those of the grooves (14, 16, and 20) are formed is first prepared. It is necessary to also form a shape reverse to that of the cylindrical void 28A in the surface of the reverse mold. As a method of manufacturing this reverse mold, any of well-known working methods such as machining with a machining center or the like, electro-discharge machining, ultrasonic machining and photoetching can be used.

A mold release agent is applied to the surface of the reverse mold. This mold release agent may be selected according to the kind of the resin material forming the base plate 12, machining conditions (including temperature) and other factors.

A resin material is thereafter applied to the surface of the reverse mold and is hardened. If the resin material is, for example, an ultraviolet curing resin, it is hardened by being irradiated with ultraviolet rays. If the resin material is, for example, a thermoplastic resin such as polyvinyl chloride (PVC), the resin material is brought into contact with the surface of the reverse mold and is formed by thermal transfer molding using a hot press machine.

The cured resin material is released from the reverse mold.

By this method, the grooves can be formed with accuracy at a low cost and the evaluation apparatus can be manufactured at a low cost.

A method for experiment using the scientific-experiment educational aid 10 in accordance with the present invention will now be described.

It is necessary to provide a set of members (1) to (12) described below as the scientific-experiment educational aid 10.
1) The reverse mold
2) The resin material for the base plate 12
3) A mold frame for molding the base plate 12
   (A mold frame used when the resin is caused to flow at the time of molding of the base plate 12)
4) The cover plate 22
5) A dropper for experiment
   (A dropper used to supply necessary experimental liquids (reagents) into the first reservoir 24 and the second reservoir 26 according to a test purpose. One dropper may be used to supply each of chemicals, or one dropper may be used for supply of the plural chemicals by being cleansed.)
6) A tape for sealing experimental liquid inlets/outlets
   (A tape used as a cover over the first reservoir 24 and the second reservoir 26. The first reservoir 24 and the second reservoir 26 are covered with the tape after experimental liquids have been supplied thereto by means of a pipette.)
7) A needle
   (A needle used when required to form a hole in the tape to allow an amount of air corresponding to a change in the amount of an experimental liquid to enter the first reservoir 24 and the second reservoir 26 when the liquids is fed forward or received at the time of supply of the liquid.)
8) A casing
   (A casing is attached for the purpose of presenting liquid leakage through the gap between the cover plate 22 and the base plate 12 or preventing damage to the cover plate 22 and other portions when this experimental set is assembled. This casing may comprise any of devices for various functions according to experimental purposes, e.g., a magnifying glass for facilitating observation of the minute channels (14A, 16A, and 20A).)
9) A liquid feed device
   (A device for feeding a liquid by utilizing a phenomenon in which volumetric gas expansion of a liquid and/or a gas in the first reservoir 24 and the second reservoir 26 is caused when heat is applied to the first reservoir 24 and the second reservoir 26 in a state where the reservoirs are covered with the tape (for example, by heating using body heat through a finger tip applied to the tape). Alternatively, a liquid in the first reservoir 24 and the second reservoir 26 may be fed out, for example, by a method using the principle of a pump.)
10) Experimental liquids (reagents)
   (A necessary chemical provided as a test reagent for this scientific experiment according to a purpose is contained in a container to be supplied. Experimental liquids, e.g., a liquid containing a coloring material typified by a coloring matter, a dyestuff or a pigment and a transparent liquid such as water are used.)
11) Experimental manual
   (A manual in which descriptions of phenomena which can be learnt from this set, including a description of the purposes of experiments made with this set, an explanation of phenomena and a description of applications, are made is attached according to need.)
12) An experimental method procedure guide

This set enables students to make the base plate 12 by themselves. If making of the base plate 12 is omitted, the completed base plate 12 may be included instead of the members (1) to (3).

The method for experiment using the scientific-experiment educational aid 10 in accordance with the present invention includes three steps: a preparatory step, a soaking-up step, and an experiment step.

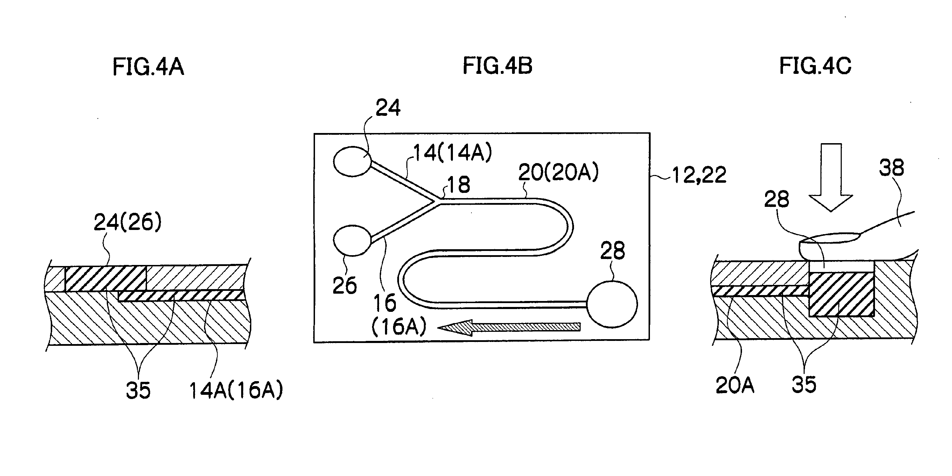

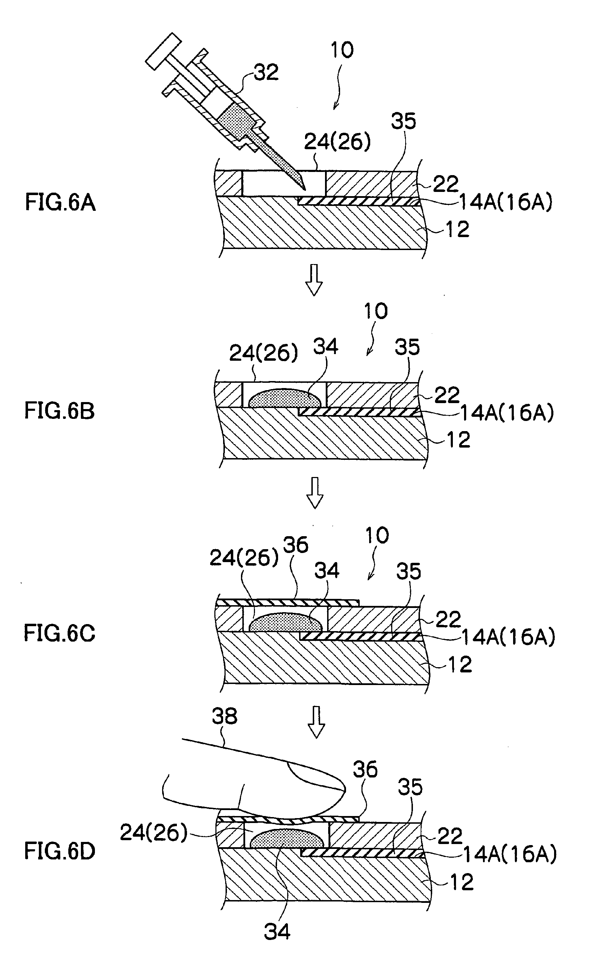

In the preparatory step, an operation to remove air in the minute channels (14A, 16A, and 20A) by causing an inactive dummy liquid 35, which does not react with an experimental liquid 34 (see Fig. 6) used for an experiment, to flow into and fill the minute channels (14A, 16A, and 20A) is performed at least one time, as shown in Figs. 4A to 4C. That is, the dummy liquid 35 (e.g., water) that does not react with the experimental liquid 34 (e.g., a dyestuff) used for the experiment and that is compatible with the experimental liquid 34 is supplied to the large-diameter third reservoir 28 on the outlet side and the reservoir 28 is strongly pressed with a finger 38 from above, as shown in Fig. 4C. The dummy liquid 35 is thereby caused to rush toward the first and second reservoirs 24 and 26 on the inlet side, as shown in Fig. 4B (see the arrow) and fill the minute channels (14A, 16A, and 20A) (Figs. 4A and 4C). Air in the minute channels (14A, 16A, and 20A) is thereby expelled. If a bubble is found in the dummy liquid 35 filling the channels, air is not completely expelled. The preparatory step is then repeated until the bubble disappears. In this way, air can be completely expelled from the minute channels (14A, 16A, and 20A) before the experiment is started. If the minute channels (14A, 16A, and 20A) are filled with the dummy liquid 35 before the experimental liquid 34 is fed into the minute channels (14A, 16A, and 20A), the wettability of the wall surfaces of the minute channels (14A, 16A, and 20A) is improved to ensure that clogging with a bubble unintentionally mixed in the liquid during the experiment does not occur easily.

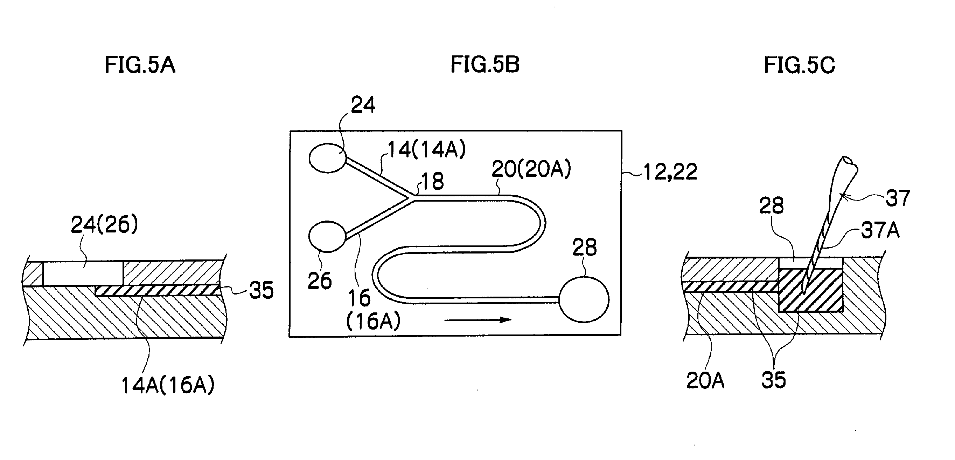

Subsequently, the soaking-up step is performed. This step is necessary because the preparatory step allows the dummy liquid 35 to also enter and stay in the first and second reservoirs 24 and 26 on the inlet side to which the experimental liquid 34 is to be supplied, and because there is a need to lower the level of the liquid in the first and second reservoirs 24 and 26 to enable supply of the experimental liquid 34. In this step, it is necessary to lower the level of the liquid in the first and second reservoirs 24 and 26 while maintaining the state where the minute channels (14A, 16A, and 20A) are filled with the dummy liquid 35, that is, mixing of the air in the minute channels (14A, 16A, and 20A) is prevented. In the soaking-up step, therefore, a thin tip 37A of a twisted piece of paper 37 is dipped in the liquid in the third reservoir 28 on the outlet side apart from the channel 20A to soak up the dummy liquid 35 by the twisted piece of paper, as shown in Fig. 5C. An extremely small amount of the dummy liquid 35 is soaked up at a time in this way. The soaking-up power of the twisted piece of paper 37 causes the dummy liquid 35 to flow to the outlet side (see the arrow), while the dummy liquid 35 is being maintained in the state of filling the minute channels (14A, 16A, and 20A) as shown in Fig. 5B, thus enabling the level of the liquid in the first and second reservoirs 24 and 26 on the inlet side to be lowered as shown in Fig. 5A. Even if air is mixed in the dummy liquid 35 during the soaking-up operation, a bubble is formed at the third reservoir 28 on the outlet side and is expelled from the third reservoir 28 on the outlet side when the experiment is started by feeding the experimental liquid 34 into the minute channels (14A, 16A, and 20A). Therefore, there is no problem with mixing of air. Accordingly, if mixing of air can be prevented even when the dummy liquid 35 is soaked out from the first and second reservoirs 24 and 26 on the inlet side by using the twisted piece of paper 37, soaking-up from first and second reservoirs 24 and 26 may be performed. Also, if the experimental liquid 34 can be injected by using an injector (not shown) having an injection opening portion just fitted to the first and second reservoirs 24 and 26, it is not necessary to provide the soaking-up step.

Subsequently, the experiment step is performed. That is, a predetermined amount of the experimental liquid 34 is supplied to the first reservoir 24 (or the second reservoir 26) by means of a dropper 32 for experiment, as shown in Figs. 6A and 6B. In this case, the minute channels (14A, 16A, and 20A) are filled with the dummy liquid 35.

Subsequently, the first reservoir 24 (or the second reservoir 26) is covered with the tape 36 for sealing the experimental liquid inlet, as shown in Fig. 6C. The tape 36 has one surface (the lower surface as viewed in the figure) coated with a pressure-sensitive adhesive. The first reservoir 24 (or the second reservoir 26) is thereby shut off from external air.

Subsequently, the finger tip 38 is brought into contact with the upper surface of the tape 36, as shown in Fig. 6D. A liquid feed device is thereby formed on the first reservoir 24 (or the second reservoir 26). This liquid feed device is the same as that described above, i.e., a pressurization-type liquid feed device which causes volumetric expansion of the gas in the first reservoir 24 (or the second reservoir 26) by heat from the finger tip 38 to feed the experimental liquid 34 into the channel 14A (or 16A). Another pressurization-type liquid feed device may alternatively be used which operates as described below. The tape 36 is downwardly bent by being pressed with the finger tip 38 to reduce the capacity of the first reservoir 24 (or the second reservoir 26). The experimental liquid 34 is thereby into the channel 14A (or 16A). Further, a depressurization-type liquid feed device may alternatively be used in which the experimental liquid 34 supplied to the first and second reservoirs 24 and 26 on the inlet side is sucked into the channel 14A (or 16A) by a suction force produced by decompressing the space in the third reservoir 28.

If the liquid feed device is of a pressurization type, the experimental liquid 34 is fed into the minute channels (14A, 16A, and 20A) in such a manner that the entire dummy liquid 35 with which the minute channels (14A, 16A, and 20A) are filled in advance is displaced in the minute channels (14A, 16A, and 20A) toward the outlet side. If the liquid feed device is of a depressurization type, the flow toward the outlet side of the dummy liquid 35 with which the minute channels (14A, 16A, and 20A) are filled in advance draws the experimental liquid 34 so that the experimental liquid 34 is led into the minute channels (14A, 16A, and 20A) by forming a flow continuously with the flow of the dummy liquid. Therefore, air is not mixed with the experimental liquid 34 during the experiment. Thus, after the experiment has been started by feeding the experimental liquid 34 into the minute channels (14A, 16A, and 20A), mixing of air forming a bubble during the experiment and a stay of bubbles on the wall surfaces of the minute channels (14A, 16A, and 20A) can be prevented.

Consequently, a disturbance in the flow of the experimental liquid 34 due to clogging with a bubble can be prevented and a steady state can be attained, thus enabling a scientific phenomenon to be correctly evaluated.

The scientific-experiment educational aid 10 is a set for enabling a student to perform making by hand, as mentioned above. The scientific-experiment educational aid 10, however, can also be sold as a completed product. The scientific-experiment educational aid 10 sold as a completed product may be such that the minute channels (14A, 16A, and 20A) are filled in advance with the inactive dummy liquid 35 which does not react with the experimental liquid 34 for an experiment in such a state that no air bubble exists in the dummy liquid 35. In this case, if the three reservoirs 24, 26, and 28 are closed with a tape or the like while being filled with the dummy liquid 35, mixing of air is prevented before the experiment is performed. The above-described soaking-up step may be first performed by removing the tape when the experiment is started. Thus, a scientific phenomenon evaluation apparatus of the present invention can be provided which enables even a low-age student such as an elementary school child to reliably perform an experiment without any failure due to clogging with a bubble.

A magnifying glass or the like may be used for the purpose of facilitating observation of a scientific phenomenon. Also, the portion of the cover plate 22 corresponding to the channel 20A may have a magnifying glass function (lens function), as described above.

The present invention has been described with respect to a case where an arrangement having two reservoirs 24 and 26 on the inlet side and one reservoir 28 on the outlet side is provided as a scientific-experiment educational aid 10. The experimental method in accordance with the present invention is particularly effective in use of a multichannel scientific-experiment educational aid 10.

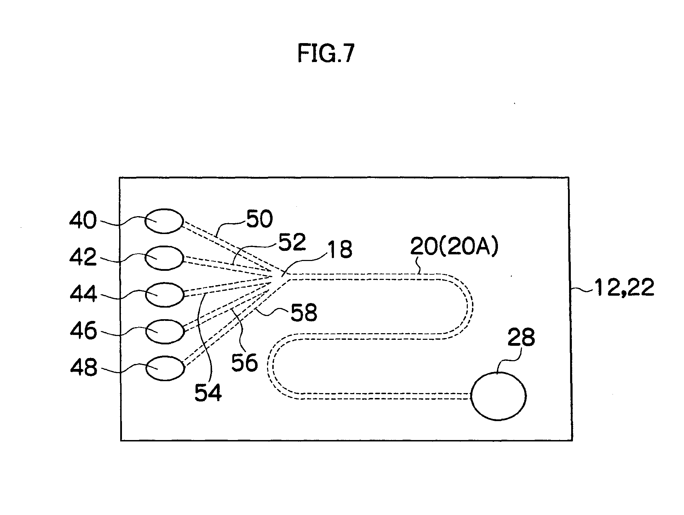

Fig. 7 shows an example of a multichannel scientific-experiment educational aid 10 constructed in such a manner that channels 50, 52, 54, 56, and 58 extending from five reservoirs 40, 42, 44, 46, and 48 formed on the inlet side join each other at a confluence portion 18 to form one channel 20A which extends to the third reservoir 28. In this multichannel scientific-experiment educational aid 10, a bubble can be formed easily upstream of the confluence portion 18 when a liquid is fed by depressurizing the reservoir 28 on the outlet side. This is because when one of the channels 50 to 58 is opened for communication of the experimental liquid 34, the resistance of the opened channel is reduced, while the resistance of a channel portion in which a bubble exists is increased. To remove the bubble, an amount of depressurization prevailing over this resistance is required. In ordinary cases, even a small bubble in one channel has a large proportion relative to the channel and acts as a cause of a disturbance in the flow of a fed liquid. Once the minute channel is clogged with a bubble, pressurization feeding from the reservoirs 40, 42, 44, 46, or 46 at a large flow rate or depressurization feeding at a large flow rate performed by depressurizing the reservoir 28 on the outlet side so that a large suction force is obtained is required for removal of the bubble, resulting in wasting of a large amount of experimental liquid 34.

In a case where a bubble is left in the channel 50 in the multichannel scientific-experiment educational aid 10 when the minute channels 50 to 58 and 20A are filled with the dummy liquid 35, only the two reservoirs: the reservoir 40 in the five reservoirs 40 to 48 and the reservoir 28 on the outlet side are opened, while the other four reservoirs 42 to 48 are tightly closed by being covered. In this state, the dummy liquid 35 is caused to flow from the reservoir 28 on the outlet side into the minute channel 20A, thereby reliably removing the bubble left in the channel 50. In a case where bubbles are left in a plurality of channels, e.g., the channels 50, 54, and 58, it is possible to remove the bubbles left in the plurality of channels at a time by opening all the reservoirs 40 to 48 and 28 and by causing the dummy liquid 35 to rush at a high rate from the reservoir 28 on the outlet side toward the plurality of reservoirs 40 to 48 on the inlet side. The operations in the soaking-up step and the experiment step are not changed between the case of a smaller number of channels and the case of a larger number of channels.

In each of the apparatuses shown in Figs. 1 and 7, each minute channel is easily clogged with a bubble when the experimental liquid 34 having a high surface tension is caused to flow through the minute channel and it is difficult to remove the clogging bubble. In consideration of this, a method using a special treatment for improving the affinity of the inner wall surface of the minute channel for the experimental liquid 34 may be adopted. It is technically possible to perform such a special treatment on the inner wall surface of the minute channel. However, the cost and time for the treatment are considerable. In contrast, the above-described method of filling the minute channel with the dummy liquid can be carried out easily at a low cost and is, therefore, more preferable.

The above-described scientific-experiment educational aid 10 has its essential portion formed as simply as possible to be provided at a low price while ensuring high experimental accuracy for the purpose of enabling students to perform scientific experiments in a micro field enjoying dreams about sciences.

In the case of qualitative observation of a molecule diffusion phenomenon or the like considered a basis for a chemical reaction in particular, it is very important to cause a plurality of experimental liquids to flow under the same conditions in the channels in order to improve the experiment accuracy. This requirement can be suitably met. That is, experiments can be performed with comparatively high accuracy by using an advantageously simple and low-priced device. Since experiments are performed in a micro field, the amounts of chemicals typified by a coloring matter or a pigment are limited to extremely small values, thus effectively reducing the environmental load.

The present invention has been described with respect to embodiments of the scientific phenomenon evaluation apparatus, the scientific-experiment educational aid and the method of manufacturing the apparatus or the educational aid. However, the present invention is not limited to the described embodiments. Other various forms may be adopted.

While the invention has been described with respect to a case where the first reservoir 24 and the second reservoir 26 are formed in the cover plate 22 and where the third reservoir 28 is formed in the base plate 12 and the cover plate 22, other forms including, for example, one in which all reservoirs are formed in the base plate 12 and the cover plate 22 may be adopted.

While in this embodiment an arrangement having three sets of channels and reservoirs is used, an arrangement having four or more sets of channels and reservoirs or an arrangement such as that shown in Fig. 7 may be adopted.

While the dropper 32 for experiment is used to supply an experimental liquid (reagent) to the reservoirs (e.g., reservoirs 24 and 26), an injector, a microsyringe or the like having the same function may alternatively be used, as mentioned above. It is ordinarily desirable to use a low-priced dropper in a scientific-experiment educational aid. In some cases, however, it is desirable to use a device having the same function according to a certain testing purpose, as described above.

## Claims

1. A method for experiment using a scientific phenomenon evaluation apparatus in which at least two reservoirs (24, 26 and 28) constituting an inlet and an outlet communicate with each other through a minute channel (14A, 16A and 20A) having a sectional area of 1 mm² or less, the method **characterized by** comprising the steps of:
a preparatory step of removing air from the minute channel in advance by causing an inactive dummy liquid (35) which does not react with an experimental liquid (34) for performing an experiment to flow into and fill the minute channel (14A, 16A and 20A), the preparatory step being performed at least one time; and
an experiment step of supplying the experimental liquid (34) to the reservoir (24 and 26) on the inlet side and feeding the experimental liquid (34) into the minute channel (14A, 16A and 20A) by using a liquid feed device (32) to cause the dummy liquid (35) filling the minute channel (14A, 16A and 20A) to flow toward the reservoir (28) on the outlet side.

2. A method for experiment using a scientific phenomenon evaluation apparatus in which at least two reservoirs constituting an inlet and an outlet communicate with each other through a minute channel (14A, 16A and 20A) having a sectional area of 1 mm² or less, the method **characterized by** comprising the steps of:
a preparatory step of removing air from the minute channel (14A, 16A and 20A) in advance by causing an experimental liquid (34) for performing an experiment to flow into and fill the minute channel (14A, 16A and 20A), the preparatory step being performed at least one time; and
an experiment step of supplying the experimental liquid (34) to the reservoir (24 and 26) on the inlet side and feeding the experimental liquid (34) into the minute channel (14A, 16A and 20A) by using a transfer device to cause the experimental liquid (34) filling the minute channel (14A, 16A and 20A) to flow toward the reservoir (35) on the outlet side.

3. The method according to claim 1 or 2, further comprising a soaking-up step of lowering the level of the liquid in the reservoir (24 and 26) on the inlet side by soaking up the liquid in the reservoir (28) on the outlet side by means of a tapered twisted piece of paper between the preparatory step and the experiment step.

4. A scientific phenomenon evaluation apparatus comprising:
a base plate (12) having a surface in which a groove having a sectional area of 1 mm² or less is formed; and
a cover plate (22) placed in close contact with the surface of the base plate (12) to cover the groove and to thereby form a minute channel (14A, 16A and 20A) in the base plate (12),
**characterized in that** ends of a plurality of the channels (14A, 16A and 20A) join each other at one confluence point (18), while the other ends of the channels respectively communicate with reservoirs (24 and 26) having a capacity of 5 to 5000 mm³, and
**characterized in that** a scientific phenomenon in the channels is visually recognizable and the plurality of channels (14A, 16A and 20A) are filled with an inactive dummy liquid (35) which does not react with an experimental liquid (34) for performing an experiment, no air bubble existing in the dummy liquid (35).

5. A scientific phenomenon evaluation apparatus comprising:
a base plate (12) having a surface in which a groove having a sectional area of 1 mm² or less is formed; and
a cover plate (22) placed in close contact with the surface of the base plate (12) to cover the groove and to thereby form a minute channel (14A, 16A and 20A) in the base plate (12),
**characterized in that** ends of first and second channels (14A and 16A) which are the two channels which are substantially equal in length to each other join each other at one confluence point (18);
the other end of the first channel (14A) communicates with a first reservoir (24) having a capacity of 5 to 5000 mm³;
the other end of the second channel (16A) communicates with a second reservoir (26) having a capacity of 5 to 5000 mm³;
one of a third channel (20A) which is the one channel communicates with the confluence point (18), while the other end of the third channel communicates with a third reservoir (28) having a capacity of 5 to 5000 mm³; and
a scientific phenomenon in the channels is visually recognizable and the plurality of channels (14A, 16A and 20A) are filled with an inactive dummy liquid (35) which does not react with an experimental liquid (34) for performing an experiment, no air bubble existing in the dummy liquid (35).
